# EUROPÄISCHE PATENTSCHRIFT

(11) **EP 3 658 252 B1**
(45) Veröffentlichungstag und Bekanntmachung des Hinweises auf die Patenterteilung: **14.09.2022**
(21) Anmeldenummer: 18743757.9
(22) Anmeldetag: 18.07.2018
(51) Int. Cl.: F01N 3/20, F02M 37/50, B01D 35/027, B01D 29/05, B01D 29/52

(54) **FLÜSSIGKEITSFILTER UND TANKFILTERSYSTEM MIT EINEM FLÜSSIGKEITSFILTER**
LIQUID FILTER AND TANK FILTER SYSTEM HAVING A LIQUID FILTER
FILTRE À LIQUIDE ET SYSTÈME FILTRANT DE RÉSERVOIR POURVU D'UN FILTRE À LIQUIDE

(30) Priorität: 25.07.2017 DE 102017212768
(43) Veröffentlichungstag der Anmeldung: 03.06.2020
(73) Patentinhaber: Robert Bosch GmbH, 70442 Stuttgart (DE)
(72) Erfinder: HOLLSTEGGE, Daniel, 28045 Madrid (ES); CASTEJON LOPEZ, Miguel, 28007 Madrid (ES); ARIAS ARIAS, Jose Luis, 28007 Madrid (ES); MARTINEZ GOMEZ, Miguel, 46022 Valencia (ES); STICH, Milo, 28012 Madrid (ES)
(86) Internationale Anmeldenummer: PCT/EP2018/069457
(87) Internationale Veröffentlichungsnummer: WO 2019/020442

(56) Entgegenhaltungen:
- EP-A1- 2 108 425
- WO-A1-2012/153202
- DE-A1-102014 217 339

## Beschreibung

### Gebiet der Erfindung

Die Erfindung betrifft einen Flüssigkeitsfilter zum Abscheiden von Partikeln aus einer Flüssigkeit, insbesondere aus Kraftstoff oder einer Harnstofflösung. Die Erfindung betrifft weiterhin ein Tankfiltersystem mit einem derartigen Flüssigkeitsfilter.

### Stand der Technik

Aus dem Stand der Technik sind sogenannte Tankfiltersysteme bekannt. In derartigen Tankfiltersystemen ist ein Flüssigkeitsfilter unmittelbar in einem Tank für die zu reinigende Flüssigkeit angeordnet. Bei der zu reinigenden Flüssigkeit kann es sich beispielsweise um Kraftstoff wie Diesel oder Benzin handeln oder um eine Harnstofflösung in einem SCR System (selektive katalytische Reduktion, "selective catalytic reduction"). Derartige SCR-Systeme finden z.B. Verwendung in der Verringerung von Stockoxidanteilen im Abgas von Brennkraftmaschinen. Durch die Anordnung des Flüssigkeitsfilters direkt im Flüssigkeitstank kann wertvoller Platz beispielsweise in Kraftfahrzeugen eingespart werden.

Ein derartiges Tankfiltersystem mit einem Flüssigkeitsfilter ist beispielsweise aus der US 2004 / 0144705 A1 bekannt.

Aus der DE 10 2014 217 339 A1 ist eine Ölfiltereinheit bekannt.

### Offenbarung der Erfindung

Die Erfindung geht aus von der Erkenntnis, dass für derartige Tankfiltersysteme bzw. Flüssigkeitsfilter in derartigen Tankfiltersystemen möglichst gleichzeitig mehrere Parameter optimiert werden sollen. Zum einen soll die Filteroberfläche möglichst groß sein, sodass eine möglichst lange Standzeit bis zum notwendigen Austausch des Flüssigkeitsfilters erreicht wird. Die Filterfläche soll mit anderen Worten dazu ausgelegt sein, möglichst viele Partikel aus der zu reinigenden Flüssigkeit abzuscheiden, bevor ein Filtermedium des Flüssigkeitsfilters verstopft bzw. derart mit Partikeln belegt ist, dass es zu einem nicht mehr akzeptablen Druckabfall zwischen einer Rohseite (z.B. der Außenseite) des Flüssigkeitsfilters und einer Reinseite (z.B. einem Innenraum) des Flüssigkeitsfilters kommt. Weiterhin sollen die Produktionskosten für einen derartigen Flüssigkeitsfilter möglichst gering sein. Dies wird bevorzugt durch einen möglichst einfachen und beschleunigten bzw. schnellen Herstellungsprozess bewirkt. Schließlich soll der Flüssigkeitsfilter all diese Parameter mit einem möglichst geringen Platzbedarf erfüllen, da beispielsweise in Kraftfahrzeugen der zur Verfügung stehende Platz für derartige Flüssigkeitsfilter beschränkt ist.

Es hat sich gezeigt, dass bei herkömmlichen Flüssigkeitsfiltern für Tankfiltersysteme entweder die Standzeit nicht ausreichend ist und daher ein relativ kurzes Wartungsintervall erforderlich ist oder dass der vom Flüssigkeitsfilter im Tank eingenommene Platz wertvolles Volumen für die zu reinigende Flüssigkeit im Tank wegnimmt - mit anderen Worten: herkömmliche Flüssigkeitsfilter für Tankfiltersysteme beanspruchen relativ viel Volumen im Tank.

Es kann daher ein Bedarf bestehen, einen Flüssigkeitsfilter für ein Tankfiltersystem bereitzustellen, welcher mit möglichst geringem Platzbedarf im Tank eine hohe Standzeit und eine hohe Filtereffizienz erreicht und dabei ein möglichst geringes Volumen einnimmt sowie möglichst einfach und kostengünstig herstellbar ist.

### Vorteile der Erfindung

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.

Gemäß einem ersten Aspekt der Erfindung wird ein Flüssigkeitsfilter zum Abscheiden von Partikeln aus einer Flüssigkeit vorgeschlagen. Bei der zu filtrierenden Flüssigkeit kann es sich beispielsweise um einen Kraftstoff wie Benzin oder Diesel oder auch um eine wässrige Harnstofflösung handeln. Der Flüssigkeitsfilter weist dabei ein erstes Filtermedium, ein zweites Filtermedium und einen Tragrahmen mit einer Tragrahmenwand auf. Die Tragrahmenwand weist eine erste Stirnseite und eine davon abgewandte zweite Stirnseite auf. Das erste Filtermedium ist auf der ersten Stirnseite fluiddicht befestigt und das zweite Filtermedium ist auf der zweiten Stirnseite fluiddicht befestigt. Der Tragrahmen, das erste Filtermedium und das zweite Filtermedium umschließen einen Innenraum. Der Tragrahmen weist eine Durchgangsöffnung auf, die beispielsweise kanalartig ausgebildet sein kann. Im Innenraum ist ein erstes Filterelement angeordnet, welches mittels der Durchgangsöffnung fluidleitend mit einem Außenraum des Flüssigkeitsfilters verbunden ist.

Durch die vorgeschlagene Ausgestaltung wird mit einfachen Mitteln die zur Verfügung stehende Filteroberfläche erheblich vergrößert, indem der Innenraum genutzt wird, um dort ein zu dem ersten Filtermedium und dem zweiten Filtermedium zusätzliches Filterelement, nämlich das erste Filterelement, anzuordnen. Somit geht kein Volumen bzw. Raum im Tank verloren, da das erste Filterelement im Innenraum aus erstem Filtermedium, zweitem Filtermedium und Tragrahmen angeordnet ist. Der derart gebildete Flüssigkeitsfilter lässt sich auch einfach herstellen und ist daher kostengünstig zu produzieren.

Im Sinne dieser Anmeldung bedeutet der Begriff "einen Innenraum umschließen" insbesondere ein fluiddichtes Abschließen gegenüber einem Außenraum des Flüssigkeitsfilter in dem Sinne, dass Flüssigkeit aus dem Außenraum (z.B. der Rohseite) lediglich dann von diesem Außenraum in den Innenraum (z.B. der Reinseite des Flüssigkeitsfilters) gelangen kann, wenn es entweder durch das erste Filtermedium oder durch das zweite Filtermedium hindurchtritt. Selbstverständlich kann Flüssigkeit auch dadurch in den Innenraum gelangen, wenn sie durch die Durchgangsöffnung hindurch tritt, von dort in das erste Filterelement gelangt und beim Hindurchtreten durch das erste Filterelement in den Innenraum gelangt. Dabei werden in der Flüssigkeit vorhandene Partikel entweder am ersten Filtermedium, am zweiten Filtermedium oder am ersten Filterelement abgeschieden, sodass die durch in den Innenraum gelangende Flüssigkeit ebenfalls gereinigt ist.

Das erste Filterelement kann beispielsweise unlösbar mit dem Tragrahmen verbunden sein. Unter dem Begriff "unlösbar" ist hier "nicht zerstörungsfrei lösbar" zu verstehen.

Die Durchgangsöffnung ist im Sinne dieser Anmeldung nicht als eine mikroskopische Pore anzusehen, durch die Flüssigkeit eintreten bzw. durchtreten kann. Vielmehr ist diese Durchgangsöffnung so groß, dass ungefilterte Flüssigkeit durch die Durchgangsöffnung hindurch in das erste Filterelement eintreten kann.

Die Durchgangsöffnung kann z.B. ein Inneres des ersten Filterelements unmittelbar mit einem Außenraum des Flüssigkeitsfilters fluidleitend verbinden. Mit anderen Worten: das Innere des ersten Filterelements ist in diesem Fall ohne weitere Zwischenlage von weiteren Elementen, z.B. Sieben oder Filtermembranen, mit dem Außenraum verbunden.

Der Flüssigkeitsfilter kann dabei beispielsweise derart ausgebildet sein, dass die Durchgangsöffnung wenigstens 0,5 % der dem Innenraum zugewandten Fläche des ersten Filtermediums ausmacht und höchstens 10 % der dem Innenraum zugewandten Fläche des ersten Filterelements. Beispielsweise kann die Durchgangsöffnung einen Durchmesser von wenigstens 0,5mm und höchstens 50mm aufweisen. Die Durchgangsöffnung kann z.B. kreisrund, oval oder auch mit im Wesentlichen rechteckigem Querschnitt ausgebildet sein, sie kann auch in der Form mehrerer Schlitze ausgebildet sein. Beispielsweise kann eine Länge des Querschnitts der Durchgangsöffnung wenigstens 10mm und eine Breite des Querschnitts der Durchgangsöffnung wenigstens 0,5mm betragen.

Bei der Berechnung der Fläche des ersten Filtermediums ist dabei nicht auf eine fraktale, mikroskopische Oberfläche abzustellen.

Weiterhin kann beispielsweise vorgesehen sein, dass eine Projektion des ersten Filterelements auf das erste Filtermedium entlang einer Flächennormale des ersten Filtermediums mehr als 50 % der Fläche des ersten Filtermediums innerhalb der Begrenzung des Tragrahmens überdeckt. Mit anderen Worten bedeckt der Schattenwurf des ersten Filterelements mehr als 50 % der Fläche des ersten Filtermediums. Bevorzugt wird mehr als 80% der Fläche und ganz besonders bevorzugt mehr als 95% der Fläche überdeckt.

Dadurch wird eine besonders große Erhöhung der aktiven Filterfläche bewirkt.

Das erste Filtermedium und das zweite Filtermedium können beispielsweise im Wesentlichen parallel zueinander angeordnet sein. Mit anderen Worten: die Tragrahmenwand weist überall im Wesentlichen dieselbe Höhe auf. Jedoch sind auch andere Ausgestaltungen denkbar.

Es kann vorgesehen sein, dass das erste Filtermedium auf der ersten Stirnseite und/oder das zweite Filtermedium auf der zweiten Stirnseite durch einen Reibschweißprozess oder einen Laserschweißprozess fluiddicht befestigt ist. Alternativ oder zusätzlich kann vorgesehen sein, dass das erste Filtermedium und/oder das zweite Filtermedium in einem Spritzgussprozess jeweils mit den zugehörigen Stirnseiten der Tragrahmenwand verbunden werden. Dabei kann beispielsweise das betreffende Filtermedium als ein Einlegeteil einer Spritzgussanlage fungieren, wobei der Tragrahmen aus einem Kunststoff gespritzt wird.

Der Flüssigkeitsfilter kann einen Auslass für die im Innenraum befindliche, gereinigte Flüssigkeit aufweisen. Dazu kann in der Tragrahmenwand ein zwischen der ersten Stirnseite und der zweiten Stirnseite angeordneter, fluidleitender Kanal angeordnet sein. Der derartig als Flüssigkeitsauslass dienende fluidleitenden Kanal kann beispielsweise einen Querschnitt aufweisen, der höchstens 10 % der Fläche des ersten Filtermediums beträgt, bevorzugt höchstens 5 % der Fläche des ersten Filtermediums. Beispielsweise kann die Durchgangsöffnung einen Durchmesser von wenigstens 0,5mm und höchstens 50mm aufweisen. Die Durchgangsöffnung kann z.B. kreisrund, oval oder auch mit im Wesentlichen rechteckigem Querschnitt ausgebildet sein, sie kann auch in der Form mehrerer Schlitze ausgebildet sein. Beispielsweise kann eine Länge des Querschnitts der Durchgangsöffnung wenigstens 10mm und eine Breite des Querschnitts der Durchgangsöffnung wenigstens 0,5mm betragen.

Grundsätzlich kann der Flüssigkeitsstrom auch umgekehrt verlaufen. In diesem Fall ist der Innenraum die Rohseite und die Flüssigkeit wird beim Durchtritt durch das erste oder zweite Filtermedium oder durch das erste Filterelement gereinigt und gelangt so auf die Außenseite des Flüssigkeitsfilters, die dann eine Reinseite darstellt. Der vorgehend beschriebene fluidleitende Kanal ist dann ein Einlass für ungereinigte Flüssigkeit.

In einer Weiterbildung ist vorgesehen, dass das erste Filterelement ein drittes Filtermedium aufweist. Dadurch wird vorteilhaft die effektive Filterfläche erhöht, wodurch sich die Standzeit des Flüssigkeitsfilters vorteilhaft vergrößert.

Die Reinigung der Flüssigkeit erfolgt dann einfach durch den Durchtritt der Flüssigkeit durch das dritte Filtermedium.

Das erste Filterelement kann vorteilhafterweise derart gebildet sein, dass es zum überwiegenden Teil, d.h. zu wenigstens 50 %, bevorzugt wenigstens 70 % und ganz besonders bevorzugt wenigstens 90 % durch das dritte Filtermedium gebildet ist.

In einer Weiterbildung ist vorgesehen, dass das erste Filterelement einen weiteren Tragrahmen mit einer weiteren Tragrahmenwand aufweist, wobei die weitere Tragrahmenwand eine dritte Stirnseite aufweist, wobei das dritte Filtermedium auf der dritten Stirnseite fluiddicht befestigt ist.

Dadurch wird eine besonders einfache Herstellung des ersten Filterelements ermöglicht. Beispielsweise kann das dritte Filtermedium auf der dritten Stirnseite durch einen Schweißprozess oder durch einen Spritzgussprozess fluiddicht befestigt werden.

Alternativ kann der weitere Tragrahmen vom dritten Filtermedium auch beidseitig bespannt sein. In diesem Fall kann der weitere Tragrahmen z.B. eine von der dritten Stirnseite abgewandte vierte Stirnseite aufweisen, wobei das dritte Filtermedium auch auf der vierten Stirnseite fluiddicht befestigt ist.

In einer Weiterbildung ist vorgesehen, dass der weitere Tragrahmen an einer von der dritten Stirnseite abgewandten Seite einen geschlossenen, fluidundurchlässigen Boden aufweist, wobei die dritte Stirnseite in einer normalen Einbaulage des Flüssigkeitsfilters nach oben weist. Die Richtungsbezeichnung "nach oben" bedeutet dabei eine Richtung entgegen der Schwerkraftrichtung.

Durch diese Anordnung wird vorteilhaft die Standzeit des ersten Filterelements erhöht. Denn die zu reinigende Flüssigkeit tritt vom Innern des ersten Filterelements nach oben durch das dritte Filtermedium hindurch in den Innenraum. In der Flüssigkeit befindliche Partikel werden an der dem Innern des ersten Filterelements zugewandten Seite des dritten Filtermediums abgeschieden. Beispielsweise können sie dann durch Vibrationen, z.B. eines Motors, oder durch Druckpulsationen einer die Flüssigkeit ansaugenden Pumpe, vom dritten Filtermedium gelöst werden und entlang der Schwerkraftrichtung nach unten auf den Boden des weiteren Tragrahmens fallen. Dort verbleiben sie und blockieren somit nicht weiter die Filterporen des dritten Filtermediums.

In einer Weiterbildung ist vorgesehen, dass das dem Außenraum des Flüssigkeitsfilters zugewandte Ende der Durchgangsöffnung von der ersten Stirnseite der Tragrahmenwand begrenzt bzw. umgeben bzw. umrandet ist. Mit anderen Worten: die Durchgangsöffnung weist in die Richtung der Flächennormalen des ersten Filtermediums. Durch diese Anordnung kann der Flüssigkeitsfilter besonders einfach hergestellt werden. Weiterhin vorteilhaft ist so ein Eintritt von Flüssigkeit in den Flüssigkeitsfilter nur aus zwei entgegengesetzten Richtungen möglich, wodurch der Flüssigkeitsfilter besonders gut den lateral in einem Tank vorhandenen Raum ausnutzen kann.

In einer Weiterbildung ist vorgesehen, dass das dem Außenraum des Flüssigkeitsfilters zugewandte Ende der Durchgangsöffnung von der Tragrahmenwand begrenzt ist. Mit anderen Worten: die Durchgangsöffnung ist innerhalb der Tragrahmenwand angeordnet und weist in eine Richtung, die im Wesentlichen senkrecht zur ersten Stirnseite des Tragrahmens ist bzw. im Wesentlichen senkrecht zu der Flächennormalen des ersten Filtermediums ist. Somit ist die Durchgangsöffnung zwischen den beiden Stirnseiten der Tragrahmenwand angeordnet. Dadurch wird eine besonders einfache Herstellung des Tragrahmens und des ersten Filterelements ermöglicht. Vorteilhaft können so auch das erste Filtermedium und das zweite Filtermedium als Gleichteile gefertigt werden.

In einer Weiterbildung ist vorgesehen, dass das erste Filterelement von der dem Innenraum zuweisenden Fläche des ersten Filtermediums und/oder von der dem Innenraum zuweisenden Fläche des zweiten Filtermediums beabstandet ist. Dadurch wird vorteilhaft bewirkt, dass eine möglichst große effektive Filterfläche bereitgestellt ist. Denn durch die Beabstandung sind sowohl das erste Filtermedium und die ihm gegenüberliegende Fläche des ersten Filterelements beide als Filterfläche wirksam bzw. sind sowohl das zweite Filtermedium und die ihm gegenüberliegende Fläche des ersten Filterelements beide als Filterfläche wirksam.

Die Beabstandung kann beispielsweise wenigstens 25% der Dicke des ersten oder zweiten Filtermediums, bevorzugt wenigstens der 1-fachen Dicke des ersten oder zweiten Filtermediums und ganz besonders bevorzugt wenigstens der 3-fachen, wenigstens der 5-fachen oder gar wenigstens der 10-fachen Dicke des ersten oder zweiten Filtermediums betragen. Alternativ oder zusätzlich kann die Beabstandung wenigstens 0,3 mm Millimeter, bevorzugt wenigstens 0,5 mm und ganz besonders bevorzugt wenigstens 1 mm oder gar wenigstens 3 mm oder gar wenigstens 6 mm betragen. So kann die gereinigte Flüssigkeit vorteilhaft besonders einfach abfließen, so dass alle Filterflächen der Filtermedien möglichst gleichmäßig durchströmt werden.

In einer Weiterbildung ist vorgesehen, dass das erste Filtermedium flächig ausgebildet ist.

Alternativ oder zusätzlich kann vorgesehen sein, dass das zweite Filtermedium flächig ausgebildet ist.

Unter einer flächigen Ausbildung ist dabei ein Aspektverhältnis zwischen der Dicke des ersten und/oder zweiten Filtermediums relativ zu einer Erstreckung des jeweiligen Filtermediums in der Ebene zu verstehen, welches wenigstens 1:5 oder 1:10, bevorzugt wenigstens 1:20 oder noch bevorzugter wenigstens 1:30 beträgt. Beispielsweise kann das erste Filtermedium und/oder das zweite Filtermedium in der Form einer dünnen Filtermembran mit einer Schichtdicke im Bereich von 5 µm bis 3000 µm, bevorzugt von 1000 µm bis 2000 µm, beispielsweise mit einer Schichtdicke von 1500 µm ausgebildet sein. Dabei können das erste und/oder zweite Filtermedium aus einer einzigen Schicht gebildet sein. Das erste Filtermedium und/oder das zweite Filtermedium können dabei beispielsweise aus einer Kunststoffmembran mit einer Porengröße von weniger als 200 µm, beispielsweise im Bereich von 5 µm bis 100 µm ausgebildet sein bzw. eine solche Membran aufweisen, bevorzugt mit einer Porengröße von 5µm bis 20µm. Es ist jedoch auch möglich, dass das erste und/oder zweite Filtermedium aus einer Mehrzahl von Schichten aufgebaut ist, z.B. aus einer Gewebeschicht mit einer Schichtdicke zwischen 100 und 400µm, die z.B. der Rohseite zugewandt ist. Einer weiteren Schicht, die als Filtervlies oder Filterfilz ausgebildet sein kann oder als Membran und eine Schichtdicke zwischen 800µm und 1500µm aufweist, sowie eine Porengröße von z.B. 5µm bis 100µm, bevorzugt von 5µm bis 20µm aufweist. Sowie einer weiteren Schicht, die z.B. der Reinseite zugewandt ist und als sogenannte Spunbound-Schicht ausgebildet sein kann, in der Art eines Endlosfadens aus einem Kunststoff und eine Schichtdicke von 50µm bis 800µm aufweist. Bevorzugte Materialien umfassen dabei Kunststoff, z.B. Polyamid, z.B. PA6, PA6.6 oder Polypropylen (PP) oder Polyethylen (PE).

Erstes und zweites Filtermedium können vom Aufbau und vom Material her gleich ausgebildet sein. Sie können sich jedoch auch hinsichtlich ihrer Dicke und/oder ihrer Porengröße und/oder hinsichtlich ihres Materials voneinander unterscheiden.

Durch eine derartige Ausgestaltung des ersten Filtermediums und/oder des zweiten Filtermediums kann der Flüssigkeitsfilter vorteilhaft besonders platzsparend und kompakt bauen und ist besonders einfach herstellbar. So können das erste und/oder zweite Filtermedium z.B. mit dem Tragrahmen mittels eines Spritzgussverfahrens verbunden sein oder durch einen Schweißvorgang. Weiterhin wird auf diese Weise ein genügend großer Innenraum zur Anordnung des ersten Filterelements ausgebildet.

Es versteht sich, dass auch das dritte Filtermedium des ersten Filterelements in analoger Weise zu dem ersten oder zu dem zweiten Filtermedium flächig ausgebildet sein kann. Das dritte Filtermedium kann beispielsweise ebenfalls als eine dünne Filtermembran ausgebildet sein. Es kann einlagig oder mehrlagig aufgebaut sein. Es kann Porengrößen zwischen 5µm und 200µm, bevorzugt von 5µm bis 20µm aufweisen und eine Dicke zwischen 5µm und 3000µm aufweisen, bevorzugt von 1000 µm bis 2000 µm, beispielsweise 1500 µm. Grundsätzlich kann das dritte Filtermedium von Material und Aufbau her gleich wie das erste und/oder das zweite Filtermedium ausgebildet sein. Es kann jedoch auch vom ersten und/oder zweiten Filtermedium verschieden sein.

Dadurch, dass das dritte Filtermedium flächig ausgebildet ist wird die aktive Filterfläche des Flüssigkeitsfilters besonders vorteilhaft vergrößert und die Standzeit verlängert.

In einer Weiterbildung kann vorgesehen sein, dass im Innern des ersten Filterelements eine Stützstruktur vorgesehen ist. Dadurch wird vorteilhaft bewirkt, dass das erste Filterelement stets ein ausreichend großes Innenvolumen aufweist, welches nicht kollabieren kann.

Alternativ oder zusätzlich kann ein Abstandselement zwischen dem ersten Filterelement bzw. dem dritten Filtermedium auf der einen Seite und dem ersten Filtermedium auf der anderen Seite angeordnet sein. Das Abstandselement kann z.B. als Kunststoffelement mit einer gewellten Struktur oder mit Abstandsrippen ausgebildet sein. Durch diese Weiterbildung wird vorteilhaft bewirkt, dass stets eine gewisse Beabstandung zwischen dem ersten Filterelement und dem ersten Filtermedium erreicht ist. Damit ist sichergestellt, dass die Filterfläche zur Reinigung der zu reinigenden Flüssigkeit stets aufrechterhalten wird und sich nicht durch einen mechanischen Kontakt zwischen den Filtermedien verringert. Auch kann dadurch vorteilhaft sichergestellt werden, dass ein ausreichend großer Spalt zum Abfließen der gereinigten Flüssigkeit zwischen den einander zugewandten Flächen der Filtermedien verbleibt.

In einer Weiterbildung kann vorgesehen sein, dass die Stützstruktur wenigstens ein Stützelement aufweist, welches im Wesentlichen parallel zum ersten Filtermedium verläuft. An dem Stützelement ist eine Mehrzahl von Rippen angeordnet, die vom Stützelement in Richtung zum ersten Filtermedium hin und/oder in Richtung zum zweiten Filtermedium hin abragen.

Dadurch wird vorteilhaft bewirkt, dass die Stützstruktur im Innern des ersten Filterelements die Aufgabe einer Art Abstandshalter einnehmen kann. Durch die Mehrzahl der Rippen wird über die Fläche des ersten Filterelements hinweg möglichst überall bewirkt, dass das erste Filterelement bzw. das dritte Filtermedium des ersten Filterelements nicht kollabiert und auf diese Weise die aktive Filterfläche stets aufrechterhalten bleibt.

In einer Weiterbildung kann vorgesehen sein, dass der Tragrahmen eine weitere Durchgangsöffnung aufweist, wobei im Innenraum ein zweites Filterelement angeordnet ist, welches mittels der weiteren Durchgangsöffnung fluidleitend mit dem Außenraum des Flüssigkeitsfilters verbunden ist. Dadurch wird vorteilhaft eine weitere Vergrößerung der aktiven Filterfläche bei gleichbleibendem Raumbedarf des Flüssigkeitsfilters bewirkt. Auf diese Weise wird vorteilhaft die Standzeit erhöht und/oder bei gleicher Standzeit lässt sich das Volumen bzw. der Raum des Flüssigkeitsfilters verringern. Beispielsweise kann die weitere Durchgangsöffnung auf einer von der ersten Durchgangsöffnung abgewandten Seite des Tragrahmens ausgebildet sein. Beispielsweise kann eine Durchgangsöffnung in normaler Einbaulage des Flüssigkeitsfilters nach oben weisen und die andere Durchgangsöffnung nach unten. Das zweite Filterelement kann analog zum ersten Filterelement ausgebildet sein.

Gemäß einem zweiten Aspekt der Erfindung wird ein Tankfiltersystem vorgeschlagen. Das Tankfiltersystem weist dabei einen Flüssigkeitsfilter nach der obigen Beschreibung auf. Ein derartiges Tankfiltersystem baut vorteilhaft besonders kompakt, weist eine lange Standzeit auf und lässt sich besonders einfach und kostengünstig herstellen.

### Zeichnungen

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

Es zeigen
- Fig. 1:: Einen schematischen Querschnitt eines Tankfiltersystems gemäß der Erfindung;
- Figs. 2a-2c:: verschiedene perspektivische Ansichten eines Flüssigkeitsfilters gemäß der Erfindung;
- Fig. 3:: einen schematischen Querschnitt durch den Flüssigkeitsfilter aus den Figuren 2a-2c;
- Fig. 4:: einen schematischen Querschnitt durch eine weitere Ausführungsform eines Flüssigkeitsfilters.

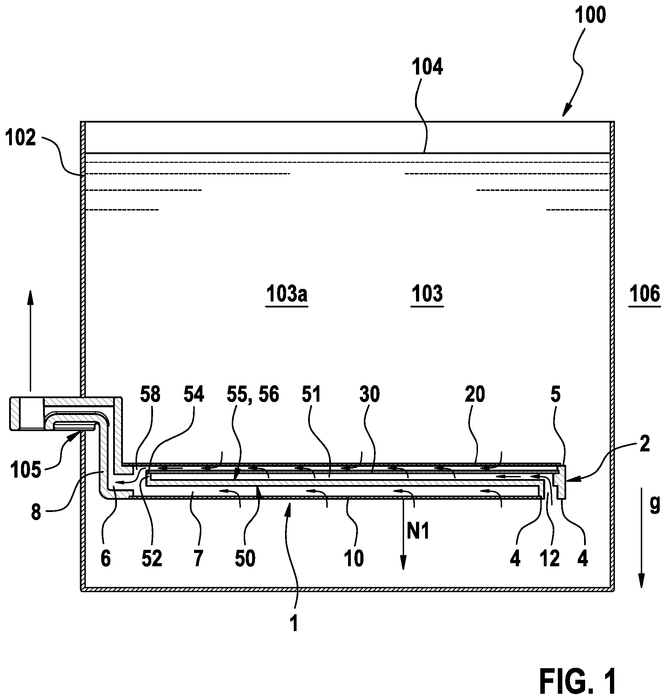

Figur 1 stellt ein Tankfiltersystem 100 dar. Das Tankfiltersystem 100 weist einen Tank 102 für eine Flüssigkeit 104 auf. Bei der Flüssigkeit 104 kann es sich beispielsweise um einen Kraftstoff, beispielsweise Diesel oder Benzin, handeln. Es ist auch möglich, dass die Flüssigkeit 104 eine (wässrige) Harnstofflösung, beispielsweise für ein SCR-System zur Abgasnachbehandlung einer Brennkraftmaschine, ist.

Die Flüssigkeit 104 im Tank 102 ist ungefiltert, somit liegt im Tank 102 eine Rohseite 103a des Tankfiltersystems 100 vor. Der Tank 102 weist weiterhin einen Durchbruch 105 auf, durch welchen gereinigte Flüssigkeit den Tank 102 verlassen kann. Der Tank 102 ist von einem Außenraum 106 des Tanks 102 umgeben. Der Tank 102 weist weiterhin in seinem Innern, d.h. auf der Rohseite 103a, einen Flüssigkeitsfilter 1 auf. Die Rohseite 103a stellt somit einen Außenraum 103 des Flüssigkeitsfilters 1 dar. Der Flüssigkeitsfilter 1 ist dazu ausgebildet, Partikel aus der Flüssigkeit 104 abzuscheiden. Der Flüssigkeitsfilter 1 weist ein erstes Filtermedium 10, ein zweites Filtermedium 20 sowie einen Tragrahmen 2 mit einer Tragrahmenwand 3 auf. Die Tragrahmenwand 3 weist eine erste Stirnseite 4 und eine davon abgewandte zweite Stirnseite 5 auf. Das erste Filtermedium 10 ist beispielsweise durch einen Reibschweißprozess, einen Laserschweißprozess oder durch einen Spritzgussprozess auf der ersten Stirnseite 4 fluiddicht befestigt. Dem Fachmann sind auch weitere stoffschlüssige Befestigungsmöglichkeiten bekannt, z.B. Kleben. Das zweite Filtermedium 20 ist in analoger Weise auf der zweiten Stirnseite 5 fluiddicht befestigt. Dabei umschließen der Tragrahmen 2, das erste Filtermedium 10 und das zweite Filtermedium 20 einen Innenraum 7, der als Reinseite dient.

Das erste Filtermedium 10 weist eine Durchgangsöffnung 12 auf, wobei im Innenraum 7 ein erstes Filterelement 50 angeordnet ist, welches mittels der Durchgangsöffnung 12 fluidleitend mit dem Außenraum 103 des Flüssigkeitsfilters 1 verbunden ist. Mit anderen Worten ist das erste Filterelement 50 fluidleitend mit der Rohseite 103a verbunden. Diese Verbindung ist hier z.B. unmittelbar, es gib somit keine Elemente zwischen dem Innern 51 des ersten Filterelements 50 und dem Außenraum 103 des Flüssigkeitsfilters 1, wie z.B. Siebe oder Filtermembranen. Im Innern 51 liegt somit ungereinigte Flüssigkeit 104 der Rohseite 103a vor. Die Durchgangsöffnung 12 zeigt im dargestellten Ausführungsbeispiel nach unten, weist also in dieselbe Richtung wie eine erste Flächennormale N1 des ersten Filtermediums 10. Auf diese Weise kann ein Flüssigkeitseintritt in den Flüssigkeitsfilter 1 nur durch zwei einander gegenüber liegende Seiten (in Fig. 1: von oben und von unten) erfolgen. Dadurch kann die laterale Erstreckung des Flüssigkeitsfilters 1 stark ausgedehnt werden und sich bis nahe an die Seitenwände des Tanks 102 erstrecken. So kann eine sehr große Filterfläche geschaffen werden.

In Figur 1 ist weiter zu erkennen, wie die Flüssigkeit 104 aus dem Tank 102 entlang der Pfeile von der Rohseite 103a im Tank 102 durch das erste Filtermedium 10 und durch das zweite Filtermedium 20 in den Innenraum 7 des Flüssigkeitsfilters 1 eintritt. Die im Innenraum 7 befindliche Flüssigkeit ist somit von Partikeln gereinigt und befindet sich somit auf der Reinseite des Flüssigkeitsfilters 1. Weiterhin kann Flüssigkeit 104 durch die erste Durchgangsöffnung 12 ins Innere 51 des ersten Filterelements 50 eintreten.

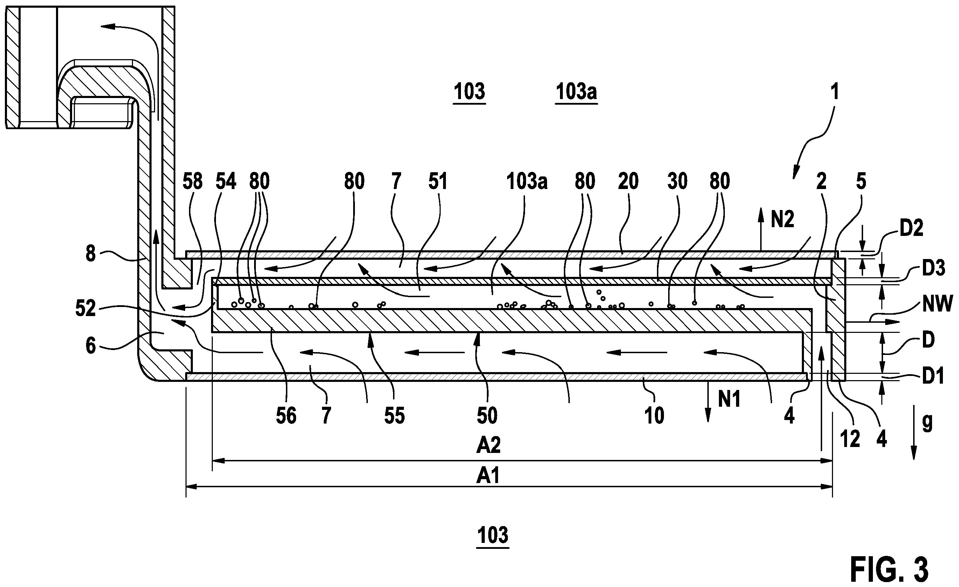

Das erste Filterelement 50 weist einen weiteren Tragrahmen 55 mit einer weiteren Tragrahmenwand 52 auf. Der weitere Tragrahmen 55 kann abschnittsweise mit der Tragrahmenwand 3 des Tragrahmens 2 zusammenfallen. Dies ist in Figur 1 oder auch in Fig. 3 an der rechten Seite zu erkennen. Dabei fällt z.B. höchstens 25% der Gesamterstreckung der weiteren Tragrahmenwand 52 des weiteren Tragrahmens 55 mit der Tragrahmenwand 3 des Tragrahmens 2 zusammen, bevorzugt höchstens 15% und ganz besonders bevorzugt höchstens 10% der Gesamterstreckung der weiteren Tragrahmenwand 52.

Die weitere Tragrahmenwand 52 weist eine dritte Stirnseite 54 auf. Das dritte Filtermedium 30 ist auf der dritten Stirnseite 54 fluiddicht befestigt. Dabei ist das dritte Filtermedium 30 bzw. das erste Filterelement 50 von dem ersten Filtermedium 10 beabstandet. Das erste Filterelement 50 bzw. das dritte Filtermedium 30 ist ebenfalls vom zweiten Filtermedium 20 beabstandet. Auf diese Weise kann Flüssigkeit auch durch die Durchgangsöffnung 12 ins Innere 51 des ersten Filterelements 50 eintreten. Von dort kann sie durch das dritte Filtermedium 30 hindurch, in Figur 1 nach oben entgegen der Schwerkraftrichtung g, in den Innenraum 7 des Flüssigkeitsfilters 1 gelangen, also zur Reinseite. Partikel, welche in der Flüssigkeit 104 enthalten sind, werden dabei im Innern 51 des ersten Filterelements 50 vom dritten Filtermedium 30 zurückgehalten.

Der weitere Tragrahmen 55 erstreckt sich länglich und flach im Innenraum 7. Seine laterale Erstreckung (in der Figur von links nach rechts bzw. in die Bildebene hinein) ist dabei z.B. wenigstens 10-fach so groß wie seine Höhe (in der Figur von unten nach oben). Der weitere Tragrahmen 55 weist an seinem in der Figur unteren Ende einen Boden 56 auf, der nicht durchlässig für die Flüssigkeit ist, also fluidundurchlässig ist. Der Tragrahmen 55 kann somit in der Form einer flachen Schale ausgebildet sein, wobei die weitere Tragrahmenwand 52 und der Boden 56 ein Volumen begrenzen, welches mit Ausnahme der neben dem Boden 56 angeordneten Durchgangsöffnung 12 nach unten und zu den Seiten hin fluidundurchlässig ist. Der Boden 56 und die weitere Tragrahmenwand 52 können z.B. aus Metall gebildet sein bzw. Metall als Material umfassen oder aus einem Kunststoff gespritzt sein und z.B. Polyamid (PA), Polypropylen (PP) oder Polyethylen (PE) umfassen, z.B. PA6, PA6.6. Boden 56 und weitere Tragrahmenwand 52 können z.B. eine Höhe von wenigstens 3mm (weitere Tragrahmenwand 52), eine Breite von wenigstens 10mm und eine Länge von wenigstens 20mm aufweisen, z.B. eine Höhe von 8mm, eine Länge von 80mm und eine Breite von 30mm. Auf dem Boden 56 können sich - wie in Fig. 3 näher dargestellt ist - Partikel 80 gesammelt werden, die aus der Flüssigkeit 104 abgeschieden worden sind und dann vom dritten Filtermedium 30 nach unten fallen. Der Boden 56 stellt eine strömungsberuhigte Zone dar. Auf diese Weise kann ohne großen Aufwand die Standzeit des ersten Filterelements 50 erhöht werden, da die am Boden 56 gesammelten Partikel nicht mehr die Poren des dritten Filtermediums 30 blockieren.

Das erste Filtermedium 10 und das zweite Filtermedium 20 sind im Wesentlichen parallel zueinander angeordnet. Das erste Filtermedium 10 und das zweite Filtermedium 20 können z.B. in der Form von dünnen Membranen mit einer flächigen Erstreckung ausgebildet sein oder auch als Filtervliese. Auch das dritte Filtermedium 30 kann in der Form einer dünnen Filtermembran oder in Form eines Filtervlieses gebildet sein.

In der Tragrahmenwand 3 ist zwischen der ersten Stirnseite 4 und der zweiten Stirnseite 5 ein fluidleitender Kanal 6 angeordnet, der zur Ableitung der gereinigten Flüssigkeit aus dem Innenraum 7 und aus dem Tank 102 geeignet ist. An dem fluidleitenden Kanal 6 ist auf der Außenseite des Flüssigkeitsfilters 1 ein Filterauslass 8 in Form eines Kanals angeordnet, welcher fluidleitend mit dem fluidleitenden Kanal 6 verbunden ist und durch den Durchbruch 105 des Tanks 102 hindurch führt. Durch den Filterauslass 8 kann somit gereinigte Flüssigkeit aus dem Tank 102 durch den Flüssigkeitsfilter 1 hindurch entnommen werden. Die derart gereinigte Flüssigkeit kann beispielsweise einer Brennkraftmaschine oder einem Abgasnachbehandlungssystem zugeführt werden.

Um das Eintreten von Flüssigkeit aus dem Tank 102 durch die Filtermedien 10, 20, 30 hindurch zu bewirken, kann am Filterauslass 8 ein Unterdruck, beispielsweise durch eine Pumpe an einer Brennkraftmaschine oder einem Abgasnachbehandlungssystem, angeordnet sein.

Grundsätzlich ist es selbstverständlich denkbar, dass der Flüssigkeitsfilter 1 auch in umgekehrter Richtung betrieben wird, d.h. das durch den Filterauslass 8 ungereinigte Flüssigkeit in den Innenraum 7 des Flüssigkeitsfilters 1 eingeleitet wird und dann vom Innenraum 7 durch die Filtermedien 10, 20, 30 hindurch in den Außenraum 103 des Flüssigkeitsfilters 1 tritt. Der Filterauslass 8 fungiert in diesem Fall selbstverständlich als ein Filtereinlass zum Einlassen von Flüssigkeit in den Flüssigkeitsfilter 1.

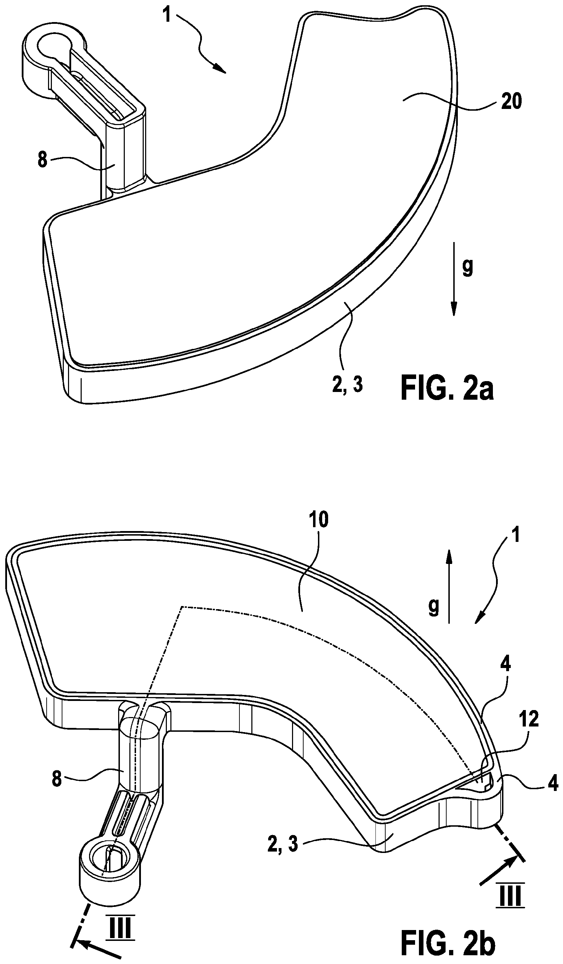

In den Figuren 2a und 2b ist eine perspektivische Ansicht eines Flüssigkeitsfilters 1 dargestellt. Figur 2a zeigt dabei eine Aufsicht auf das zweite Filtermedium 20, Figur 2b eine Aufsicht auf das erste Filtermedium 10. Die Schwerkraftrichtung g ist durch einen Pfeil gekennzeichnet und bezieht sich auf eine normale Einbaulage des Flüssigkeitsfilters 1 in den Tank 102.

In Figur 2b ist die Durchgangsöffnung 12 im Tragrahmen 2 zu erkennen. Es ist deutlich erkennbar, dass es sich bei der Durchgangsöffnung 12 nicht lediglich um eine Pore wie im ersten Filtermedium 10 handelt, sondern um eine Öffnung, welche beispielsweise wenigstens 0,5mm oder wenigsten 2 mm Durchmesser, bevorzugt wenigstens 8 mm Durchmesser aufweist, so dass ungereinigte Flüssigkeit 104 durch die Durchgangsöffnung 12 ins erste Filterelement 50, welches hier nicht sichtbar ist, gelangen kann. Die Durchgangsöffnung 12 ist von der Tragrahmenwand 3 begrenzt und weist in dieselbe Richtung wie die erste Stirnseite 4 der Tragrahmenwand 3. Die Durchgangsöffnung 12 ist in der Art eines geweiteten Spaltes in der nach außen weisenden Tragrahmenwand 3 ausgebildet. Das erste Filtermedium 10 ist dabei im Bereich der Durchgangsöffnung nur an der ersten Stirnseite 4 der dem Innenraum 7 benachbarten Tragrahmenwand 3 befestigt. Mit anderen Worten ist nicht die gesamte erste Stirnseite 4 der Tragrahmenwand 3 von dem ersten Filtermedium 10 bedeckt bzw. überdeckt.

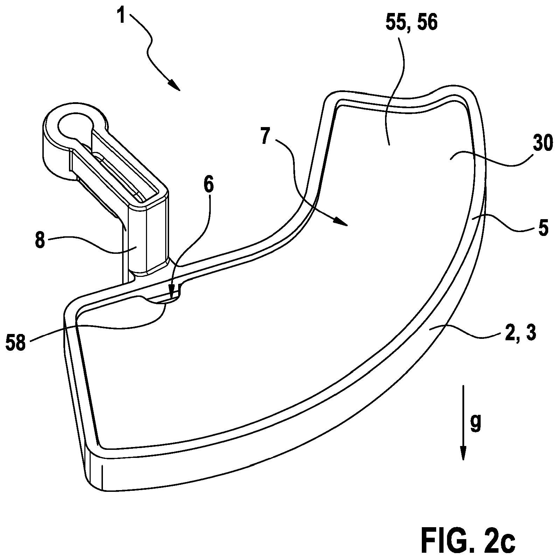

Figur 2c zeigt die Ansicht aus Figur 2a, wobei hier das zweite Filtermedium 20 weggelassen ist, um die Anordnung des ersten Filterelements 50 im Innenraum 7 des Flüssigkeitsfilters 1 zu zeigen.

Vom ersten Filterelement 50 ist dabei die dem Innenraum 7 zugewandte Oberseite des dritten Filtermediums 30 sichtbar. Das dritte Filtermedium 30 kann z.B. auf der dritten Stirnseite 54 des weiteren Tragrahmens 55 aufgeschweißt sein oder in einem Spritzgussprozess mit dem weiteren Tragrahmen 55 fluiddicht verbunden sein. Grundsätzlich kann der weitere Tragrahmen 55 auch auf seiner in Figur 1 nach unten weisenden Seite offen sein (also ohne Boden 56 gestaltet sein). Dort kann dann ebenfalls das dritte Filtermedium 30 befestigt sein. Dabei kann das dritte Filtermedium 30 einstückig ausgebildet sein oder es werden zwei zunächst separate Filtermedien auf den gegenüberliegenden Stirnseiten der weiteren Tragrahmenwand 52 befestigt.

In der Figur 2c ist auch der fluidleitende Kanal 6 in der Tragrahmenwand 3 angedeutet, welcher den Innenraum 7 des Flüssigkeitsfilters 1, d.h. die Reinseite, mit dem Auslass 8 verbindet.

In Figur 2c ist gut sichtbar, dass das erste Filterelement 50 den größten Teil der Fläche des Innenraums 7 in einer Erstreckungsebene senkrecht zur Schwerkraftrichtung g bzw. zur Höhe des Flüssigkeitsfilters 1 einnimmt. Im dargestellten Ausführungsbeispiel beträgt die Fläche des ersten Filterelements 50 mehr als 90% der Fläche des Innenraums 7. Grundsätzlich kann vorgesehen sein, dass das erste Filterelement 50 wenigstens 50%, besonders bevorzugt wenigstens 70% und ganz besonders bevorzugt wenigstens 85% der Fläche des Innenraums 7 einnimmt. Auf diese Weise wird eine besonders große zusätzliche Filterfläche geschaffen.

Das Abfließen der gereinigten Flüssigkeit im Raum zwischen dem zweiten Filtermedium 20 und dem dritten Filtermedium 30 hin zum Filterauslass 8, der auch als Auslass bezeichnet werden kann, ist durch eine Abflussöffnung 58 gewährleitet. Diese Abflussöffnung 58 ist durch eine konkave Gestaltung der weiteren Tragflächenwand 52 in der Nähe des fluidleitenden Kanals 6 gestaltet.

Der Tragrahmen 2 des Flüssigkeitsfilters 1 ist in den Figuren 2a bis 2c bananenförmig gekrümmt ausgebildet. Auf diese Weise lässt er sich besonders gut einer Tankform anpassen.

Figur 3 zeigt einen Querschnitt durch den Flüssigkeitsfilter aus den Figuren 2a-2c. Im Innern 51 des ersten Filterelements 50 liegt die ungefilterte Flüssigkeit 104, also die Rohseite 103a, vor und der Innenraum 7 des Flüssigkeitsfilters 1 stellt die Reinseite dar.

Weiterhin ist erkennbar, dass das erste Filterelement 50 (hier sein Boden 56) durch einen Abstand D vom ersten Filtermedium 10 beabstandet ist. Der Abstand D beträgt beispielsweise wenigstens 25% der Dicke D1 des ersten Filtermediums 10, bevorzugt wenigstens der 1-fachen Dicke D1 des ersten Filtermediums 10 und ganz besonders bevorzugt wenigstens der 3-fache oder wenigstens der 5-fachen oder sogar wenigstens der 10-fachen Dicke D1 des ersten Filtermediums 10. In absoluten Werten kann der Abstand D z.B. wenigstens 0,3 mm, bevorzugt wenigstens 0,5 mm oder sogar wenigstens 1mm oder wenigstens 3mm oder wenigstens 6mm betragen. Dadurch werden eine besonders hohe Filtereffizienz und ein gleichmäßiger Abfluss der gereinigten Flüssigkeit gewährleistet. Es wird darauf hingewiesen, dass in Figur 3 die erste Dicke D1 des ersten Filtermediums 10 sowie die zweiten Dicke D2 des zweiten Filtermediums 20 und die dritte Dicke D3 des dritten Filtermediums 30 überhöht dargestellt sind. In einer Ausführung sind die drei Dicken D1, D2, D3 durch die Ausführung der Filtermedien 10, 20, 30 als dünne Filtermembranen z.B. maximal 100 µm oder maximal 400µm dick. In einer anderen Ausführungsform liegen die drei Dicken D1, D2, D3 der drei Filtermedien 10, 20, 30 im Bereich von 1000µm bis 3000µm, wobei die drei Filtermedien 10, 20, 30 auch mehrlagig ausgeführt sein können. Eine Höhe H der Tragrahmenwand 3 (zwischen den Stirnseiten 4, 5) dagegen beträgt beispielsweise wenigstens 5 mm, bevorzugt wenigstens 8mm und ganz besonders bevorzugt wenigstens 10mm.Beispielsweise beträgt die Höhe der Tragrahmenwand 3 ca. 10mm oder ca. 20mm und die drei Dicken D1, D2, D3 betragen jeweils ca. 1500µm.

Auch ist das erste Filterelement 50 von dem zweiten Filtermedium 20 beabstandet (ohne Bezugszeichen). Der Abstand zwischen dem ersten Filterelement 50 und dem zweiten Filtermedium kann z.B. mindestens so groß sein wie der Abstand D zwischen dem ersten Filterelement 50 und dem ersten Filtermedium 10.

Weiterhin ist in Figur 3 zu erkennen, dass eine erste Fläche A1 des ersten Filtermediums 10, von der in Figur 3 lediglich eine Dimension zu erkennen ist, nur unwesentlich größer ist als eine zweite Fläche A2 des ersten Filterelements 50. Die zweite Fläche A2 ergibt sich durch eine Projektion des ersten Filterelements 10 entlang der ersten Flächennormale N1 des ersten Filtermediums 10 auf das erste Filtermedium 10, in der Art eines Schattenwurfs. Auch von der zweiten Fläche A2 ist hier lediglich eine Richtung bzw. Dimension angegeben. Durch den Vergleich mit Figur 2c wird jedoch deutlich, dass das erste Filterelement 50 wenigstens 50 %, bevorzugt wenigstens 70 % des ersten Filtermediums 10 und ganz besonders bevorzugt wenigstens 85 % des ersten Filtermediums 10 überdeckt.

In Fig. 3 wird deutlich, dass das zweite Filtermedium 20, dessen zweite Flächennormale N2 nach oben weist, eine größere Fläche aufweist als das erste Filtermedium 10. Dies ist der Tatsache geschuldet, dass die Durchgangsöffnung 12 in der ersten Stirnseite 4 der Tragflächenwand 3 ausgebildet ist bzw. von der ersten Stirnseite 4 der Tragflächenwand 3 begrenzt wird. Der Platzbedarf für die Durchgangsöffnung 12 fehlt somit dem ersten Filtermedium 10. Selbstverständlich kann die Durchgangsöffnung 12 auch in der zweiten Stirnseite 5 der Tragflächenwand 3 ausgebildet sein.

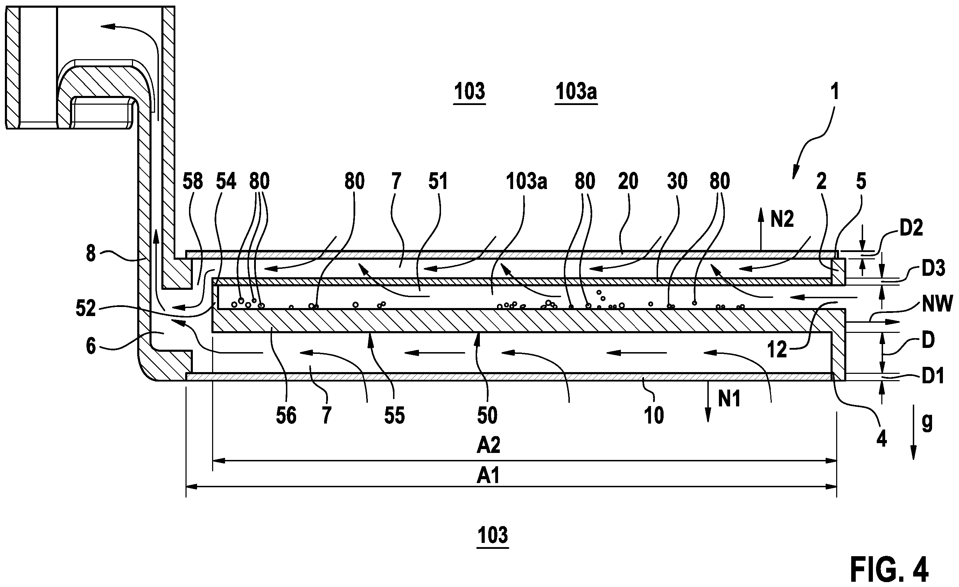

Fig. 4 zeigt einen schematischen Querschnitt durch eine weitere Ausführungsform des Flüssigkeitsfilters 1. Dieser ist im Prinzip aufgebaut wie derjenige aus Fig. 3. Jedoch ist bei dem in Fig. 4 dargestellten Ausführungsbeispiel die Durchgangsöffnung 12 in der Tragflächenwand 3 ausgebildet. Sie kann zwischen den beiden Stirnseiten 4, 5 der Tragflächenwand 3 ausgebildet sein. Mit anderen Worten: die Durchgangsöffnung 12 weist in die Richtung der Tragflächenwand-Normalen NW. In diesem Fall können das erste Filtermedium 10 und das zweite Filtermedium 20 als Gleichteile gefertigt werden. Der Zustrom von ungereinigter Flüssigkeit 104 zum ersten Filterelement 50 erfolgt dann aus einer um 90° gedrehten Richtung verglichen mit dem Zustrom von Flüssigkeit durch erstes und zweitens Filtermedium 10, 20 hindurch. Querschnitt und Form der Durchgangsöffnung 12 können in diesem Ausführungsbeispiel genauso gewählt sein wie in dem Ausführungsbeispiel gemäß den Figuren 1 bis 3. Die Durchgangsöffnung 12 kann in allen Ausführungsbeispielen auch durch eine Mehrzahl von Schlitzen gebildet sein, wodurch sich der Fluidstrom ins erste Filterelement 50 vergleichmäßigen und beruhigen lässt. Dies wiederum vermindert das Risiko, bereits abgeschiedene Partikel aufzuwirbeln.

In den Figuren 3 und 4 sind die von der dem Innern 51 zugewandten Fläche des dritten Filtermediums 30 abgefallenen Partikel 80 zu erkennen, die sich am Boden 56 sammeln. Der Boden 56 kann eine strömungsberuhigte Zone darstellen, so dass die Partikel 80 nicht wieder aufgewirbelt werden. Der Boden 56 kann beispielsweise als Vertiefung ausgebildet sein, was die Strömungsberuhigung verbessert. Die Partikel 80 können am Boden 56 auch verklumpen, so dass ein Aufwirbeln durch die strömende Flüssigkeit erschwert wird. Die so abgeschiedenen Partikel 80 belegen nicht mehr die Poren des dritten Filtermediums 30, wodurch sich die Standzeit des Flüssigkeitsfilters 1 erhöht.

In einer nicht dargestellten weiteren Ausführungsform des Flüssigkeitsfilters kann im Innern 51 des ersten Filterelements 50 eine Stützstruktur vorgesehen sein. Die Stützstruktur wird z.B. durch ein Stützelement mit einer Mehrzahl von daran angeordneten Rippen gebildet. Das Stützelement erstreckt sich dabei im Wesentlichen parallel zum ersten Filtermedium 10 und die Mehrzahl der Rippen ragt vom Stützelement quer in Richtung hin zum ersten Filtermedium 10 und/oder zum zweiten Filtermedium 20 ab. Durch das Vorsehen der Stützstruktur wird verhindert, dass das dritte Filtermedium 30 im Betrieb kollabiert und sich auf diese Weise in unerwünschter Art die aktive Filterfläche verringert. Durch eine derartige Stützstruktur kann das erste Filterelement 50 sehr flach gebaut werden, z.B. mit einer Höhe zwischen Boden 56 und dem dritten Filtermedium zwischen 0,25mm und 8mm, bevorzugt zwischen 0,5mm und 5mm, z.B. 0,5mm oder 1mm oder 3mm.

Weiterhin kann zwischen dem ersten Filtermedium 10 und dem ersten Filterelement 50 ein hier nicht dargestelltes Abstandselement angeordnet sein. Dieses kann beispielsweise aus einem gewellten Kunststoff gebildet sein. Grundsätzlich ist es möglich, dass in einzelnen Ausführungsformen entweder nur ein Abstandselement vorgesehen ist oder nur eine Stützstruktur. Abstandselement und Stützstruktur bewirken, dass stets die zusätzliche Filterfläche des ersten Filterelements 50 zur Verfügung steht und sich die Filterfläche nicht durch den Kontakt bzw. ein Aufeinanderliegen der Filtermedien 10, 20, 30 bzw. eines der Filtermedien mit einer gegenüberliegenden Fläche reduziert.

In einer weiteren, hier nicht dargestellten, Ausführungsform des Flüssigkeitsfilters 1 ist neben dem ersten Filterelement 50, welches an der Durchgangsöffnung 12 des ersten Filtermediums 10 angeordnet ist, ein ähnliches zweites Filterelement mit einer weiteren Durchgangsöffnung fluidleitend mit dem Außenraum 103 des Flüssigkeitsfilters 1 verbunden. Dabei weist der Tragrahmen 2 die weitere Durchgangsöffnung auf. Die weitere Durchgangsöffnung kann analog zur Durchgangsöffnung 12 ausgebildet sein. Die beiden Durchgangsöffnungen können z.B. in verschiedene Richtungen weisen, z.B., unter Heranziehung von Figur 3, eine nach oben und eine nach unten. Auch ist denkbar, dass beide in dieselbe Richtung weisen. Das zweite Filterelement kann analog zum ersten Filterelement 50 ausgebildet sein. So kann das zweite Filterelement ein viertes Filtermedium aufweisen bzw. umfassend, welches beispielsweise analog zum ersten, zweiten oder dritten Filtermedium 10, 20, 30 in der Form einer dünnen Membran bzw. eines Filtervlieses ausgebildet ist.

Das Tankfiltersystem 100 bzw. der Flüssigkeitsfilter 1 sind beispielsweise geeignet für die Filtrierung von Kraftstoffen wie z.B. Diesel oder Benzin und insbesondere für Flüssigkeiten, welche in SCR-Systemen Verwendung finden, z.B. wässrige Harnstofflösung. Grundsätzlich kann das Tankfiltersystem 100 auch für die Filtrierung von Wasser geeignet sein.

## Patentansprüche

1. Flüssigkeitsfilter zum Abscheiden von Partikeln aus einer Flüssigkeit, insbesondere aus Kraftstoff oder einer Harnstofflösung, aufweisend:
-- ein erstes Filtermedium (10),
-- ein zweites Filtermedium (20),
-- einen Tragrahmen (2) mit einer Tragrahmenwand (3),
wobei die Tragrahmenwand (3) eine erste Stirnseite (4) und eine davon abgewandte zweite Stirnseite (5) aufweist,
wobei das erste Filtermedium (10) auf der ersten Stirnseite (4) fluiddicht befestigt ist, wobei das zweite Filtermedium (20) auf der zweiten Stirnseite (5) fluiddicht befestigt ist, wobei der Tragrahmen (2), das erste Filtermedium (10) und das zweite Filtermedium (20) einen Innenraum (7) fluiddicht gegenüber einem Außenraum (103) des Flüssigkeitsfilters (1) umschließen,
wobei der Tragrahmen (2) eine Durchgangsöffnung (12) aufweist,
wobei im Innenraum (7) ein erstes Filterelement (50) angeordnet ist, welches mittels der Durchgangsöffnung (12) fluidleitend mit dem Außenraum (103) des Flüssigkeitsfilters (1) verbunden ist.

2. Flüssigkeitsfilter nach einem der vorhergehenden Ansprüche,
wobei das erste Filterelement (50) ein drittes Filtermedium (30) aufweist.

3. Flüssigkeitsfilter nach Anspruch 2,
wobei das erste Filterelement (50) einen weiteren Tragrahmen (55) mit einer weiteren Tragrahmenwand (52) aufweist,
wobei die weitere Tragrahmenwand (52) eine dritte Stirnseite (54) aufweist,
wobei das dritte Filtermedium (30) auf der dritten Stirnseite (54) fluiddicht befestigt ist.

4. Flüssigkeitsfilter nach Anspruch 3,
wobei der weitere Tragrahmen (55) an einer von der dritten Stirnseite (54) abgewandten Seite einen geschlossenen, fluidundurchlässigen Boden (56) aufweist, wobei die dritte Stirnseite (54) in einer normalen Einbaulage des Flüssigkeitsfilters (1) nach oben weist.

5. Flüssigkeitsfilter nach einem der vorhergehenden Ansprüche,
wobei das dem Außenraum (103) des Flüssigkeitsfilters (1) zugewandte Ende der Durchgangsöffnung (12) von der ersten Stirnseite (4) der Tragrahmenwand (3) begrenzt ist.

6. Flüssigkeitsfilter nach einem der Ansprüche 1 bis 5,
wobei das dem Außenraum (103) des Flüssigkeitsfilters (1) zugewandte Ende der Durchgangsöffnung (12) von der Tragrahmenwand (3) begrenzt ist.

7. Flüssigkeitsfilter nach einem der vorhergehenden Ansprüche,
wobei das erste Filterelement (50) von der dem Innenraum (7) zuweisenden Fläche des ersten Filtermediums (10) beabstandet ist
und/oder
wobei das erste Filterelement (50) von der dem Innenraum (7) zuweisenden Fläche des zweiten Filtermediums (20) beabstandet ist.

8. Flüssigkeitsfilter nach einem der vorhergehenden Ansprüche,
wobei das erste Filtermedium (10) und das zweite Filtermedium (20) flächig ausgebildet sind.

9. Flüssigkeitsfilter nach einem der vorhergehenden Ansprüche,
wobei im Innern (51) des ersten Filterelements (50) eine Stützstruktur vorgesehen ist.

10. Flüssigkeitsfilter nach Anspruch 9,
wobei die Stützstruktur wenigstens ein Stützelement aufweist, welches im Wesentlichen parallel zum ersten Filtermedium (10) verläuft. An dem Stützelement ist eine Mehrzahl von Rippen angeordnet, die vom Stützelement in Richtung zum ersten Filtermedium (10) hin und/oder in Richtung zum zweiten Filtermedium (20) hin abragen.

11. Flüssigkeitsfilter nach einem der vorhergehenden Ansprüche,
wobei der Tragrahmen (2) eine weitere Durchgangsöffnung aufweist, wobei im Innenraum (7) ein zweites Filterelement angeordnet ist, welches mittels der weiteren Durchgangsöffnung fluidleitend mit dem Außenraum (103) des Flüssigkeitsfilters (1) verbunden ist.

12. Tankfiltersystem für ein Kraftfahrzeug,
wobei das Tankfiltersystem (100) einen Flüssigkeitsfilter (1) nach einem der vorhergehenden Ansprüche aufweist.

## Claims

1. Liquid filter for separating particles from a liquid, in particular from fuel or a urea solution, having:
- a first filter medium (10),
- a second filter medium (20),
- a supporting frame (2) with a supporting frame wall (3),
wherein the supporting frame wall (3) has a first end face (4) and a second end face (5) facing away therefrom,
wherein the first filter medium (10) is fastened fluid-tightly on the first end face (4),
wherein the second filter medium (20) is fastened fluid-tightly on the second end face (5),
wherein the supporting frame (2), the first filter medium (10) and the second filter medium (20) enclose an interior space (7) fluid-tightly in relation to an exterior space (103) of the liquid filter (1),
wherein the supporting frame (2) has a through opening (12),
wherein, in the interior space (7), there is a first filter element (50) which is connected by means of the through opening (12) in a fluid-conducting manner to the exterior space (103) of the liquid filter (1).

2. Liquid filter according to one of the preceding claims,
wherein the first filter element (50) has a third filter medium (30).

3. Liquid filter according to Claim 2,
wherein the first filter element (50) has a further supporting frame (55) with a further supporting frame wall (52),
wherein the further supporting frame wall (52) has a third end face (54),
wherein the third filter medium (30) is fastened fluid-tightly on the third end face (54).

4. Liquid filter according to Claim 3,
wherein the further supporting frame (55) has a closed, liquid-impermeable base (56) on a side facing away from the third end face (54),
wherein the third end face (54) faces upward in a normal installation position of the liquid filter (1) .

5. Liquid filter according to one of the preceding claims,
wherein that end of the through opening (12) which faces the exterior space (103) of the liquid filter (1) is delimited by the first end face (4) of the supporting frame wall (3).

6. Liquid filter according to one of Claims 1 to 5,
wherein that end of the through opening (12) which faces the exterior space (103) of the liquid filter (1) is delimited by the supporting frame wall (3).

7. Liquid filter according to one of the preceding claims,
wherein the first filter element (50) is spaced apart from that surface of the first filter medium (10) which faces the interior space (7), and/or
wherein the first filter element (50) is spaced apart from that surface of the second filter medium (20) which faces the interior space (7).

8. Liquid filter according to one of the preceding claims,
wherein the first filter medium (10) and the second filter medium (20) are planar.

9. Liquid filter according to one of the preceding claims,
wherein a support structure is provided in the interior (51) of the first filter element (50).

10. Liquid filter according to Claim 9,
wherein the supporting structure has at least one supporting element which runs substantially parallel to the first filter medium (10), wherein a plurality of ribs are arranged on the supporting element, the ribs protruding from the support element in the direction of the first filter medium (10) and/or in the direction of the second filter medium (20).

11. Liquid filter according to one of the preceding claims,
wherein the supporting frame (2) has a further through opening, wherein, in the interior space (7), there is a second filter element which is connected by means of the further through opening in a fluid-conducting manner to the exterior space (103) of the liquid filter (1).

12. Tank filter system for a motor vehicle,
wherein the tank filter system (100) has a liquid filter (1) according to one of the preceding claims.

## Revendications

1. Filtre à liquide servant à la séparation de particules issues d'un liquide, en particulier d'un carburant ou d'une solution d'urée, présentant :
-- un premier milieu filtrant (10),
-- un deuxième milieu filtrant (20),
-- un cadre de support (2) doté d'une paroi de cadre de support (3),
la paroi de cadre de support (3) présentant un premier côté frontal (4) et un deuxième côté frontal (5) opposé à celui-ci,
le premier milieu filtrant (10) étant fixé de manière étanche aux fluides sur le premier côté frontal (4), le deuxième milieu filtrant (20) étant fixé de manière étanche aux fluides sur le deuxième côté frontal (5), le cadre de support (2), le premier milieu filtrant (10) et le deuxième milieu filtrant (20) renfermant un espace intérieur (7) de manière étanche aux fluides par rapport à un espace extérieur (103) du filtre à liquide (1),
le cadre de support (2) présentant une ouverture de passage (12),
un premier élément filtrant (50) étant disposé dans l'espace intérieur (7), lequel premier élément filtrant est relié de manière fluidique à l'espace extérieur (103) du filtre à liquide (1) au moyen de l'ouverture de passage (12) .

2. Filtre à liquide selon l'une des revendications précédentes,
le premier élément filtrant (50) présentant un troisième milieu filtrant (30).

3. Filtre à liquide selon la revendication 2,
le premier élément filtrant (50) présentant un autre cadre de support (55) doté d'une autre paroi de cadre de support (52),
l'autre paroi de cadre de support (52) présentant un troisième côté frontal (54),
le troisième milieu filtrant (30) étant fixé de manière étanche aux fluides sur le troisième côté frontal (54).

4. Filtre à liquide selon la revendication 3,
l'autre cadre de support (55) présentant, sur un côté opposé au troisième côté frontal (54), un fond (56) fermé imperméable aux fluides, le troisième côté frontal (54) étant tourné vers le haut dans une position d'installation normale du filtre à liquide (1).

5. Filtre à liquide selon l'une des revendications précédentes,
l'extrémité, tournée vers l'espace extérieur (103) du filtre à liquide (1), de l'ouverture de passage (12) étant limitée par le premier côté frontal (4) de la paroi de cadre de support (3).

6. Filtre à liquide selon l'une des revendications 1 à 5,
l'extrémité, tournée vers l'espace extérieur (103) du filtre à liquide (1), de l'ouverture de passage (12) étant limitée par la paroi de cadre de support (3).

7. Filtre à liquide selon l'une des revendications précédentes,
le premier élément filtrant (50) étant espacé de la surface du premier milieu filtrant (10) tournée vers l'espace intérieur (7)
et/ou
le premier élément filtrant (50) étant espacé de la surface du deuxième milieu filtrant (20) tournée vers l'espace intérieur (7).

8. Filtre à liquide selon l'une des revendications précédentes,
le premier milieu filtrant (10) et le deuxième milieu filtrant (20) étant formés de manière plane.

9. Filtre à liquide selon l'une des revendications précédentes,
une structure de soutien étant prévue dans l'intérieur (51) du premier élément filtrant (50).

10. Filtre à liquide selon la revendication 9,
la structure de soutien présentant au moins un élément de soutien, lequel s'étend sensiblement parallèlement au premier milieu filtrant (10), une pluralité de nervures étant disposée sur l'élément de soutien, lesquelles nervures font saillie à partir de l'élément de soutien en direction du premier milieu filtrant (10) et/ou en direction du deuxième milieu filtrant (20).

11. Filtre à liquide selon l'une des revendications précédentes,
le cadre de support (2) présentant une autre ouverture de passage, un deuxième élément filtrant étant disposé dans l'espace intérieur (7), lequel deuxième élément filtrant est relié de manière fluidique à l'espace extérieur (103) du filtre à liquide (1) au moyen de l'autre ouverture de passage.

12. Système filtrant de réservoir pour un véhicule automobile,
le système filtrant de réservoir (100) présentant un filtre à liquide (1) selon l'une des revendications précédentes.
